Europäisches Patentamt

European Patent Office

Office européen des brevets

(11) Veröffentlichungsnummer: **0 203 470 B1**

(12) **EUROPÄISCHE PATENTSCHRIFT**

(45) Veröffentlichungstag der Patentschrift: 27.03.91

(51) Int. Cl.5: **H01F 1/11**, G11B 5/706, C01G 49/06

(21) Anmeldenummer: 86106635.5

(22) Anmeldetag: 15.05.86

(54) Verfahren zur Herstellung feinteiliger und nadelförmiger hexagonaler Ferrite sowie ihre Verwendung zur Herstellung magnetischer Aufzeichnungsträger und Plastoferrite.

(30) Priorität: 23.05.85 DE 3518481

(43) Veröffentlichungstag der Anmeldung:
03.12.86 Patentblatt 86/49

(45) Bekanntmachung des Hinweises auf die
Patenterteilung:
27.03.91 Patentblatt 91/13

(84) Benannte Vertragsstaaten:
DE FR GB NL

(56) Entgegenhaltungen:
EP-A- 0 123 445

(73) Patentinhaber: **BASF Aktiengesellschaft
Carl-Bosch-Strasse 38
W-6700 Ludwigshafen(DE)**

(72) Erfinder: **Hibst, Hartmut, Dr.
Sternstrasse 215
W-6700 Ludwigshafen(DE)**
Erfinder: **Rudolf, Peter, Dr.
Nibelungenweg 14
W-6701 Maxdorf(DE)**
Erfinder: **Jakusch, Helmut, Dr.
Lorscher Ring 6c
W-6710 Frankenthal(DE)**

## Beschreibung

Die Erfindung betrifft ein Verfahren zur Herstellung feinteiliger und nadelförmiger hexagonaler Ferrite der allgemeinen Formel $AMe_xFe_{12-x}O_{19}$ mit x ⩽ 4, in der A Barium und/oder Strontium und Me Indium oder äquimolare Mengen von Zink oder Kobalt und Titan bedeuten sowie ihre Verwendung zur Herstellung von magnetischen Aufzeichnungsträgern und Plastoferriten.

Für eine Reihe von Anwendungen auf dem Gebiet der fälschungssicheren Codierung, z.B. bei Identitätsausweisen, Kreditkarten sowie magnetische Speicherung von sonstigen Kennungen, ist es wünschenswert, magnetische Aufzeichnungsträger zur Verfügung zu haben, welche eine gegenüber den derzeitigen Standardspeichermedien höhere Koerzitivfeldstärke aufweisen. Entsprechende Materialien wären gegenübere magnetischen Fremdfeldern unempfindlicher und somit nur unter erschwerten Bedingungen zu fälschen.

Weiterhin werden für spezielle magnetische und elektromagnetische Anwendungen Plastoferritmaterialien mit besonderen magnetischen und elektromagnetischen Eigenschaften benötigt.

Für die genannten Anwendungen werden üblicherweise hexagonale Ferrite der allgemeinen Formel $AFe_{12}O_{19}$ verwendet, in der A Barium und/oder Strontium bedeutet. Die magnetischen Eigenschaften dieser hexagonalen $AFe_{12}O_{19}$-Ferrite können durch eine Substitution mit Fremdionen verändert werden. So führt z.B. die Substitution der Fe(III)-Ionen durch äquimolare Mengen von Co(II)- und Ti(IV)-Ionen zu einer Herabsetzung der Anisotropiefeldstärke (US-PS 2,960,471; G. Winkler, Z.f.angew.Phys. 21 (1966) 282-286). Eine Substitution der Fe(III)-Ionen durch In(III) führt zur Herabsetzung der Anisotropiekonstanten $K_1$ und der Sättigungsmagnetisierung (H. Kojima und K. Haneda, Ferrites, Proc.Int.Conf. 1970 (Pub. 1971), 380-382).

Ferritpulver für die Herstellung von weitgehend fälschungssicheren magnetischen Aufzeichnungen werden üblicherweise nach dem keramischen Verfahren hergestellt. Dazu werden Bariumcarbonat bzw. Strontiumcarbonat und Eisenoxid in dem Verhältnis, das der chemischen Formel des späteren Ferrits entspricht, gemischt und diese Mischung einer Wärmebehandlung, dem sogenannten Vorsintern, bei Temperaturen zwischen 1100 und 1300 °C unterworfen. Beim Vorsintern bildet sich der magnetische Hexaferrit. Die entstandenen versinterten Konglomerate aus Kristalliten werden anschließend meist unter Zusatz von Wasser zu einem Pulver, dessen Teilchengröße rund 1 μm beträgt, gemahlen. Durch das Mahlen entstehen Kristallbaufehler in den Teilchen, die eine Erniedrigung der Koerzitivfeldstärke zur Folge haben. So hergestellte Ferritpulver weisen im allgemeinen zwar eine recht gute spezifische remanente Magnetisierung auf, die Koerzitivfeldstärke $_jH_c$ liegt aber mit etwa 200 kA/m vor dem Mahlen und kleiner 150 kA/m nach dem Mahlen recht niedrig. Außerdem sind die erhaltenen Pulver für eine Anwendung als Magnetpigment zu grobteilig und weisen darüberhinaus in nachteiliger Weise ein äußerst breites Teilchengrößenspektrum auf. Die durch das Mahlen hervorgerufenen Kristallbaudefekte lassen sich durch ein Nachtempern nach dem Mahlen oder durch einen Sinterprozeß zum Teil ausheilen, wobei Koerzitivfeldstärken von bis zu 300 kA/m erreicht werden. Allerdings führt die Nachtemperung in nachteiliger Weise zu einem weiteren Verlust an Pigmentfeinteiligkeit. Wird ein auf diese Weise durch Mahlung und anschließende Temperung erhaltenes grobteiliges Bariumferritpulver mit einem hohen Füllgrad in eine Kunststoffschmelze eingearbeitet, so hat dies durch den erforderlichen Knetprozeß einen starken Abfall der Koerzitivfelstärke zur Folge.

Aus der EP-A-123 445 ist ein Verfahren zur Herstellung von Ba(6 Ti)x $Fe_{12-x}O_{19}$ Teilchen mit plättchenförmiger Struktur bekannt.

Weiterhin sind zur Herstellung von hexagonalen Ferritpulvern sogenannte Fluxverfahren bekannt, bei denen Flußmittel zur Förderung der Reaktion zwischen den einzelnen Metalloxiden eingesetzt werden, wie z.B. $B_2O_3$, Alkaliborate, PbO, Alkaliferrite, $Bi_2O_3$, Molybdate, Alkalihalogenide und -sulfate. So wird nach der US-PS 3,093,589 Bariumferrit durch Temperung eines Gemenges aus $BaCO_3$, nadelförmigem $\alpha$-FeOOH und eines katalytisch wirkenden Bariumchloridzusatzes von 0,1 bis 1 Gew.% bei 890 bis 980 °C hergestellt. Es fallen unregelmäßig geformte plättchenförmige Kristalle mit geraden Kanten an. Die US-PS 3,793,443 beschreibt ein Verfahren zur Herstellung von $BaFe_{12}O_{19}$-Pulver aus einem Gemenge von $BaCO_3$, FeOOH und Alkalimetallchlorid durch Temperung bei 1000 °C. Nach Auswaschen des Alkalihalogenids werden gleichmäßig hexagonale Kristallplättchen erhalten. In der US-PS 3,903,228 wird ein Verfahren offenbart, bei dem ein homogenes Gemenge aus $BaCO_3$, feinteiligem nadelförmigem $\alpha$-$Fe_2O_3$ mit einer spezifischen Oberfläche von größer 20 $m^2$/g mit einem 3 bis 10 Gew.% NaF-Zusatz bei 950 bis 1100 °C getempert wird. Nach dem Auswaschen werden Kristallplättchen mit einem Plättchendurchmesser von kleiner 1 μm erhalten. Nach der US-PS 4,042,516 wird bei der Temperung eines Gemenges aus 1 Mol $SrCO_3$, 6 Mol nadelförmigem $\alpha$-FeOOH und 0,06 bis 2 Mol $SrCl_2$ bei 1000 °C und anschließender Extraktion mit Wasser plättchenförmiger Sr-Ferrit mit einer Plättchengröße von etwa 2 μm erhalten. Die Fluxverfahren haben den großen Nachteil, daß die erhaltenen Temperprodukte im allgemeinen durch einen Auswaschprozeß mit Wasser oder verdünnten Säuren vom katalytisch wirkenden Flußmittelanteil befreit werden müssen. Außerdem wirken die zugesetzten Flußmittel meist stark korrosionsfördernd und können sowohl das eingesetzte Tiegelmaterial schädigen als auch durch ihre hohe Flüchtigkeit die eingesetzten Öfen zerstören.

Weiterhin sind Verfahren zur Herstellung von Bariumferrit bekannt, bei denen von definierten Eisenoxidhydroxdpulvern ohne Zusatz von katalytisch wirkenden Flußmitteln ausgegangen wird. So beschreibt die DE-AS 19 11 318 ein Verfahren zur Herstellung von magnetisch anisotropen Dauermagneten durch einmalige Temperung eines aus $BaCO_3$ und nadelförmigem $\alpha$- oder $\gamma$-FeOOH bestehenden Preßlings bei 1190 bis 1300 °C, in dem die FeOOH-Nadeln durch einen vorangegangenen Preßprozeß senkrecht zur Preßrichtung mechanisch ausgerichtet worden sind. Gemäß der US-PS 3,723,587 wird in einem zweistufigen Verfahren zur Herstellung von magnetisch anisotropen Dauermagneten ein Gemenge aus $BaCO_3$ und nadelförmigem $\alpha$-FeOOH vorgepreßt und der erhaltene Formkörper bei 1000 °C vorgetempert. Anschließend wird der vorgetemperte Formkörper einer Hauptpressung unterworfen, bei einem Druck, der oberhalb der Vorpressung liegt. Abschließend erfolgt eine Haupttemperung bei 1250 °C. In der JP-PS 54 142198 wird ein Verfahren zur Herstellung von plättchenförmigem Ba- und Sr-Ferrit beschrieben, bei dem von einem gerichteten Filterkuchen, bestehend aus $BaCO_3$ bzw. $SrCO_3$ und nadelförmigem $\alpha$-FeOOH, ausgegangen wird. Dazu wird eine Suspension aus $BaCO_3$ bzw. $SrCO_3$ und nadelförmigem $\alpha$-FeOOH in einer speziellen Weise, z.B. unter Verwendung einer Schwerkraftfiltration, so filtriert, daß im erhaltenen Filterkuchen die FeOOH-Nadeln parallel zur Filtratfläche zum Liegen kommen und dabei von feinteiligem $BaCO_3$ bzw. $SrCO_3$ eingebettet sind. Der erhaltene Filterkuchen wird als ganzes in unzerkleinerter Form oder in Form würfelförmiger 10 bis 20 mm großer Stücke bei 1100 °C getempert, wobei die FeOOH-Nadeln unter Reaktion mit $BaCO_3$ oder $SrCO_3$ zu plättchenförmigem hexagonalem Ferrit mit einem Teilchendurchmesser von 0,5 bis 1,5 $\mu$m zusammenwachsen. Anschließend wird das erhaltene Sintergut pulverisiert. Die erhaltenen Bariumferritpulver besitzen eine Koerzitivfeldstärke von 200 kA/m, die erhaltenen Strontiumferritpulver besitzen $_jH_c$-Werte von 223 kA/m. Von R. Takada et al. (Proc. Intern. Conf. on Ferrites, July 1970, Japan, S. 275-278) wurde die Herstellung von $SrFe_{12}O_{19}$-Dauermagneten durch eine einmalige Sinterung bei 1200 bis 1300 °C von Preßlingen, bestehend aus $SrCO_3$ und nadelförmigem $\alpha$-FeOOH, elektronenoptisch untersucht. Danach verläuft die Sr-Ferritbildung in den Preßlingen otaktisch, wobei die kristallographische (100)-Ebene vom $\alpha$-FeOOH in die (0001)-Ebene

vom $SrFe_{12}O_{19}$ übergeht. L. Girada et al (J.de Physique, Cl, Suppl. 4, 38 , 1977, S. Cl-325) gelang es erstmalig durch Umsetzung von einem pulverförmigen, nicht verpreßten oder verformten Gemenge, bestehend aus $SrCO_3$ und nadelförmigem $\alpha$-FeOOH bei 1050 °C in einem Hochtemperaturfließbett zu einem hochkoerzitiven Sr-Ferritpulver ($H_c$ = 446 kA/m) mit einer spezifischen Oberfläche von 3 bis 4 $m^2/g$ zu gelangen. Die Autoren führen die erforderliche, vergleichsweise niedrige Reaktionstemperatur von 1050 °C, die resultierende hohe Pigmentfeinteiligkeit, die erhaltene enge Teilchengrößenverteilung und die sich daraus ergebende hohe Koerzitivfeldstärke auf die angewendete, aufwendige Hochtemperaturfließbett-Technik zurück.

Es bestand daher die Aufgabe, ein wirtschaftliches Verfahren zur Herstellung eines magnetischen Materials bereitzustellen, das den Anforderungen genügt, welche an ein magnetisches Material für die Verwendung in magnetischen Aufzeichnungsträgern und in Plastoferritmaterialien gestellt werden. Ein solches Material sollte sich vor allem durch eine hohe Feinteiligkeit bei enger Teilchengrößenverteilung, durch eine vergleichsweise hohe Koerzitivfeldstärke und besonders durch eine gute Dispergierbarkeit für die Einarbeitung in organische Bindemittel auszeichnen.

Es wurde nun überraschenderweise gefunden, daß hexagonale Ferrite mit nadelförmigem Kristallhabitus der Formel $AMe_xFe_{12-x}O_{19}$ mit; x $\leqslant$ 4, A Barium und/oder Strontium und Me Indium oder äquimolare Mengen von Zink oder Kobalt und Titan bedeuten, die aufgabengemäß geforderten Eigenschaften aufweisen, wenn bei der Herstellung der genannten Ferrite eine wäßrige Dispersion von nadelförmigem Eisen(III)oxidhydroxid mit einer wäßrigen Bariumchlorid- und/oder Strontiumchloridlösung, einer wäßrigen Me-Chlorid-Lösung und einer wäßrigen Natriumcarbonatlösung umgesetzt, die resultierende Mischung erhitzt, der Feststoffanteil der erhaltenen Dispersion von der wäßrigen Phase abgetrennt, ausgewaschen, getrocknet und zerkleinert und das erhaltene Pulver auf Temperaturen von 800 bis 1070 °C erhitzt wird.

Zur Durchführung des erfindungsgemäßen Verfahrens wird eine wäßrige Dispersion des nadelförmigen FeOOH mit einer wäßrigen Lösung des $ACl_2$, mit einer wäßrigen Lösung des Me-Chlorids und einer wäßrigen Lösung des $Na_2CO_3$ versetzt. Das molare Me/Fe-Verhältnis beträgt vorteilhafterweise 0,002 bis 0,5, das molare (Me+Fe)/A-Verhältnis beträgt vorteilhafterweise 9 bis 12 und das molare Na/Cl-Verhältnis beträgt vorteilhafterweise 1 bis 2. Danach wird die Reaktionsmischung 0,5 bis 3 Stunden lang auf Temperaturen von 60 bis 100 °C erhitzt. Nach dem Abkühlen wird der Feststoffanteil der erhaltenen wäßrigen Dispersion von der wäßrigen Phase abgetrennt, was üblicherweise durch Filtration geschieht, mit Wasser chloridfrei gewaschen und getrocknet. Die Zerkleinerung der erhaltenen Trockenmasse auf eine Teilchengröße von 0,1 bis 5, vorzugsweise 0,1 bis 1 mm wird über einen trockenen Mahl- und anschließenden Siebprozeß erreicht. Die pulverisierte Trockenmasse wird nun 0,5 bis 3 Stunden lang auf eine Temperatur von 800 bis 1070 °C erhitzt. Das erhaltene Material gehört zur Gruppe der hexagonalen Ferrite und läßt sich mit der Formel $AMe_xFe_{12-x}O_{19}$ beschreiben.

Als nadelförmige Eisen(III)-oxidhydroxide eignen sich $\alpha$-FeOOH und $\gamma$-FeOOH. Für das erfindungsgemäße Verfahren sind diese Teilchen besonders geeignet, wenn sie eine spezifische Oberfläche von 15 bis 80, vorzugsweise von 20 bis 50 $m^2$/g und ein Längen/Dicken-Verhältnis von 2 bis 30, vorzugsweise 5 bis 25 aufweisen. Die Herstellung dieser Eisen(III)-oxid-hydroxide ist bekannt. So kann das $\alpha$-FeOOH beispielsweise gemäß der in der DE-OS 15 92 398 offenbarten Verfahrensweise gewonnen werden, während sich das $\gamma$-FeOOH gemäß der DE-AS 10 61 760, der DE-PS 12 23 352 oder DE-OS 22 12 435 herstellen läßt.

Aufgrund des erfindungsgemäßen Verfahrens lassen sich die genannten Ferrite unmittelbar als sehr feinkörnige, unversinterte Pulver gewinnen. Sie bestehen aus sehr kleinen Kristallnadeln, die die Kristallform des eingesetzten nadelförmigen FeOOH besitzen und eine spezifische Oberfläche von größer 7 $m^2$/g aufweisen. Im Vergleich zu undotierten nadelförmigen Ferriten der Zusammensetzung $AFe_{12}O_{19}$ (A = Ba, Sr) weisen die erfindungsgemäß hergestellten nadelförmigen Ferrite vorteilhaftere Teilcheneigenschaften auf, wie eine wesentlich geringere Dispergierhärte beim Einarbeiten in organische Bindemittel und Harze zur Herstellung von magnetischen Aufzeichnungsträgern. Wie mit Hilfe des Glanzentwicklungstests nachgewiesen werden konnte, nimmt die Dispergierhärte mit steigendem Substitutionsgrad x ab. Die geringere Dispergierhärte der erfindungsgemäßen nadelförmigen und sehr feinteiligen Ferritpulver hat in vorteilhafter Weise eine höhere Oberflächengüte der aus den erfindungsgemäßen nadelförmigen Ferritpulvern hergestellten magnetischen Aufzeichnungsträger zur Folge, als mit herkömmlichen Ba-Ferritpigmenten erreicht werden kann.

Weiterhin bewirken die vorteilhaften Teilcheneigenschaften auch ein verbessertes Dispergierverhalten in Polymerschmelzen. Deshalb sind die erfindungsgemäß hergestellten Ferritpigmente besonders für die Verwendung als magnetisches oder elektromagnetisch aktives Material in Plastoferriten geeignet. So weisen aus den erfindungsgemäßen feinteiligen Ferriten hergestellte spritzgegossene Plastoferritteile eine hervorragende Oberflächenglätte auf. Da die Einarbeitung der erfindungsgemäß hergestellten feinteiligen hexagonalen Ferritpulver in eine organische Matrix keine Zerstörung oder Schädigung der erfindungsgemäßen feinteiligen und gut dispergierbaren Ferritteilchen zur Folge hat, zeigen aus den erfindungsgemäß hergestellten Ferriten hergestellte Plastoferritmaterialien verbesserte magnetische und elektromagnetische Eigenschaften, verglichen mit herkömmlichen grobteiligen Ferritpulvern.

Bei der TEM-Untersuchung weisen die erfindungsgemäßen nadelförmigen Ferritpulver im Gegensatz zu undotiertem Ferrit einen ausgeprägten Einzelnadelcharakter auf. Offensichtlich führt die Umhüllung der FeOOH-Nadeln mit sehr feinteiligem Zink- oder Kobalt-Carbonat und basischem Ti-Carbonat bzw. mit sehr feinteiligem $In_2(CO_3)_3$ bei der Umsetzung bei höheren Temperaturen zum substituierten nadelförmigen Bariumferritpigment zu einer signifikanten Herabsetzung des Versinterungsgrades der erhaltenen Ferritnadeln.

Weiterhin zeichnet sich das erfindungsgemäße Verfahren gegenüber den bekannten Fluxverfahren dadurch aus, daß auf die Anwendung von korrosionsfördernden Flußmitteln, die außerdem nachträglich wieder ausgewaschen werden müssen, verzichtet werden kann.

Als weiterer Vorteil muß bei dem erfindungsgemäßen Verfahren angesehen werden, daß das trockene Gemenge aus Metallcarbonaten und nadelförmigem FeOOH zur Temperung in zerkleinerter Form eingesetzt wird. Damit erfordert das erfindungsgemäße Verfahren keine aufwendigen Kompaktier- oder Tablettiertechniken und keine speziellen Filtrationstechniken, wie sie zur Herstellung von Formkörpern mit einer mechanischen Ausrichtung der FeOOH-Nadeln erforderlich sind.

Weiterhin sind bei dem erfindungsgemäßen Verfahren zur Temperung des Gemenges aus Metallcarbonaten und FeOOH keine speziellen und aufwendigen Sintertechniken, wie z.B. eine Hochtemperaturfließbett-Technik erforderlich. Statt dessen wird die Temperung über konventionelle Techniken, wie z.B. durch Erhitzen in Tiegeln, Schalen oder Drehrohröfen vorgenommen. Daraus ergeben sich als überraschender Vorteil des erfindungsgemäßen Verfahren gegenüber dem konventionellen Temperverfahren niedrigere Reaktionstemperaturen.

Die Erfindung sei anhand folgender Beispiele näher erläutert:

Beispiel 1 (Vergleichsbeispiel)

Es wird eine Dispersion bestehend aus 50,00 kg nadelförmigem $\alpha$-FeOOH mit einer spezifischen Oberfläche von 27 $m^2$/g und einem Längen/Dicken-Verhältnis von 10 und 500 l Wasser unter starkem Rühren hergestellt und mit einer Lösung von 12,835 kg $BaCl_2 \bullet 2 H_2O$ in 50 l Wasser versetzt. Anschließend wird unter weiterem Rühren eine Lösung von 7,167 kg $Na_2CO_3$ in 40 l Wasser zugegeben. Die erhaltene Dispersion wird unter Rühren aufgeheizt und 2 Stunden lang bei 90°C erhitzt. Nach dem Abkühlen wird der Feststoffanteil der Dispersion über eine herkömmliche Filterpresse abfiltriert, mit Wasser chloridfrei gewaschen und getrocknet. Die erhaltene Trockenmasse wird in einer Mühle trocken vermahlen und anschließend durch ein Sieb mit einem Maschenabstand von 0,3 mm passiert. Das zerkleinerte, gesiebte Pulver wird in einer Edelstahlschale 1 Stunde lang bei 1000°C getempert und danach abgekühlt. Das erhaltene im Röntgendiagramm einphasige $BaFe_{12}O_{19}$-Präparat besteht aus elongierten Ferritteilchen mit einer spezifischen Oberfläche von 7,5 $m^2/g$. Die Koerzitivfeldstärke (Hc) beträgt 423 kA/m, die spezifische remanente Magnetisierung ($M_r/\rho$) beträgt 42 $nTm^3/g$.

Zur Bestimmung des relativen Dispergieraufwandes beim Einsatz eines Pigmentes und zur Voraussage der erreichbaren Oberflächengüte eines späteren Aufzeichnungsmediums wird der sogenannte Glanzentwicklungstest 2, angelehnt an die DIN-Vorschrift 53 238, angewendet. Dazu werden 7 g der Pigmentprobe in eine 100 ml-Schraubdeckelglasflasche eingewogen und 35 g eines Dispergierlackes mit einer Viskosität von 60 mPa·sec, bestehend aus einem handelsüblichen isocyanatfreien Polyesterurethan aus Adipinsäure, Butandiol-1,4 und 4,4'-Diisocyanatodiphenylmethan, einem Copolymeren aus Vinylchlorid und Maleinsäureethylester sowie einer Mischung eines oxethylierten Phosphonsäureesters mit dem Alkylamid der Sulfobernsteinsäure, Tetrahydrofuran und Dioxan sowie 35 $cm^3$ Stahlkugeln ($\varnothing$ = 2 mm) zugegeben. Auf einer Schüttelkugelmühle werden jetzt beidseitig 2 solcher Probeansätze eingespannt und die Dispergierung durchgeführt. Nach 80 Minuten Dispergierzeit und darauffolgend alle 40 Minuten bis zu insgesamt 320 Minuten werden Dispersionsproben entnommen und je ein Abstrich hergestellt. Dies geschieht mit einem Filmziehgerät der Firma Erichsen (Typ 335/1) und einem Spiralrakel (30 $\mu m$) bei einer Ausziehgeschwindigkeit von 12,8 mm/sec auf einer Polyesterfolie (17 $\mu m$ Stärke). Dieser Ausstrich wird > 12 h an Luft trocknen gelassen. Als Maß für den Dispergiergrad dient der Reflektometerwert an dem jeweiligen Ausstrich. Er wird mit der Universalmeßeinheit UME 4 der Firma Lange mit einem 85° Meßkopf gewonnen. Aus den vorliegenden Wertepaaren Dispergierdauer $t_i$/Glanzwert $G_i$ wird nun die Ausgleichsgerade

$$\frac{t}{G} = f(t)$$

berechnet und daraus der Glanzwert nach 75 Minuten (G 75) bzw. 300 Minuten Dispergierzeit (G 300) ermittelt. Als Dispergierhärte DH wird dann der Wert

$$DH = \frac{G\ 300}{G\ 75} - 1 \times 100$$

angegeben. Je niedriger dieser Wert ist, desto leichter läßt sich das Pigment dispergieren. G 300 wird als Endglanzwert GE (Ende des Tests) bezeichnet. Zur Erzielung glatter Oberflächen sollte er möglichst hoch liegen.

Der beschriebene Glanzentwicklungstest wird auf das nach Beispiel 1 erhaltene $BaFe_{12}O_{19}$-Pulver angewendet. Es ergibt sich ein Endglanzwert G 300 = GE von nur 40,5 %. Die Dispergierhärte DH beträgt 78.

Beispiel 2

Es wird eine Dispersion bestehend aus 4446 g $\alpha$-FeOOH mit einer spezifischen Oberfläche von 27 $m^2/g$ und einem Längen/Dicken-Verhältnis von 10 und 45 l $H_2O$ unter starkem Rühren hergestellt und unter Rühren nacheinander mit einer Lösung von 433 g $TiCl_4$ in 1 l $H_2O$, mit einer Lösung von 1611 g $Na_2CO_3$ in 4 l $H_2O$, mit einer Lösung von 1189 g $BaCl_2 \bullet 2 H_2O$ in 3 l $H_2O$ und mit einer Lösung von 310 g $ZnCl_2$ in 1 l $H_2O$ versetzt. Die erhaltene Dispersion wird unter weiterem Rühren aufgeheizt und 2 Stunden lang bei 90°C erhitzt. Nach dem Abkühlen wird, wie in Beispiel 1 beschrieben, weiterverfahren.

Das erhaltene im Röntgendiagramm einphasige $BaZn_{0,5}Ti_{0,5}Fe_{11}O_{19}$-Präparat besteht aus Ferritteilchen mit einem ausgeprägt nadelförmigen Teilchenhabitus mit einer spezifischen Oberfläche von 9,7 $m^2/g$. Die Koerzitivfeldstärke beträgt 236 kA/m, die spezifische remanente Magnetisierung ($Mr/\rho$) beträgt 39 $nTm^3/g$.

Das erhaltene $BaZn_{0,5}Ti_{0,5}Fe_{11}O_{19}$-Präparat ergibt im Glanzentwicklungstest gemäß Beispiel 1 einen Endglanzwert G 300 = GE von 59,0 %. Die Dispergierhärte DH beträgt nur 69.

Beispiel 3

Es wird eine Dispersion von 1563 g $\alpha$-FeOOH mit einer spezifischen Oberfläche von 27 $m^2/g$ und

einem Längen/Dicken-Verhältnis von 10 und 16 l $H_2O$ unter starkem Rühren hergestellt und unter Rühren nacheinander mit einer Lösung von 345 g $TiCl_4$ in 0,8 l $H_2O$, mit einer Lösung von 1010 g $Na_2CO_3$ in 3 l $H_2O$, mit einer Lösung von 463 g $BaCl_2 \bullet 2 H_2O$ in 1,5 l $H_2O$ und einer Lösung von 247 g $ZnCl_2$ in 1 l $H_2O$ versetzt. Die erhaltene Dispersion wird unter weiterem Rühren aufgeheizt und 2 Stunden lang bei 90°C erhitzt. Nach dem Abkühlen wird, wie in Beispiel 1 beschrieben, weiterverfahren.

Das erhaltene im Rötgendiagramm einphasige $BaZnTiFe_{10}O_{19}$-Präparat besteht aus Ferritteilchen mit einem ausgeprägt nadelförmigen Teilchenhabitus mit einer spezifischen Oberfläche von 10,2 $m^2/g$. Die Koerzitivfeldstärke beträgt 154 kA/m, die spezifische remanente Magnetisierung ($M_r/\rho$) beträgt 32 $nTm^3/g$

Das erhaltene $BaZnTiFe_{10}O_{19}$-Präparat ergibt im Glanzentwicklungstest gemäß Beispiel 1 einen Endglanz G 300 = GE von 67,5 %. Die Dispergierhärte DH beträgt nur 56,5.

Beispiel 4

Es wird eine Dispersion bestehend aus 251,8 g $\alpha$-FeOOH mit einer spezifischen Oberfläche 27 $m^2/g$ und einem Längen/Dicken-Verhältnis von 10 und 2,5 l $H_2O$ unter starkem Rühren hergestellt und unter Rühren nacheinander mit einer Lösung von 27,65 g $InCl_3$ in 0,5 l $H_2O$, mit einer Lösung von 63,7 g $Na_2CO_3$ in 0,5 l $H_2O$ und einer Lösung von 67,2 g $BaCl_2 \bullet 2 h_2O$ in 0,5 l $H_2O$ versetzt. Die erhaltene Dispersion wird unter weiterem Rühren aufgeheizt und 2 Stunden lang bei 90°C erhitzt. Nach dem Abkühlen wird, wie in Beispiel 1 beschrieben, weiterverfahren.

Das erhaltene im Röntgendiagramm einphasige $BaIn_{0,5}Fe_{11,5}O_{19}$-Präparat besteht aus Ferritteilchen mit einem ausgeprägt nadelförmigen Teilchenhabitus mit einer spezifischen Oberfläche von 9,3 $m^2/g$. Die Koerzitivfeldstärke beträgt 270 kA/m, die spezifische remanente Magnetisierung ($M_r/\rho$) beträgt 40 $nTm^3/g$.

**Ansprüche**

1. Verfahren zur Herstellung feinteiliger und nadelförmiger hexagonaler Ferrite der Formel $AMe_xFe_{12-x}O_{19}$ mit x ⩽ 4, in der A Barium und/ode Strontium und Me Indium oder äquimolare Mengen von Zink oder Kobalt und Titan bedeutet, dadurch gekennzeichnet , daß eine wäßrige Dispersion von nadelförmigem Eisen-(III)-oxidhydroxid mit einer wäßrigen $ACl_2$-Lö-

sung, einer wäßrigen Me-Chlorid-Lösung und einer wäßrigen Natriumcarbonat-Lösung umgesetzt, die resultierende Mischung erhitzt, der Feststoffanteil der erhaltenen Dispersion von der wäßrigen Phase abgetrennt, ausgewaschen, getrocknet und zerkleinert und das erhaltene Pulver auf Temperaturen von 800 bis 1070°C erhitzt wird.

2. Verfahren nach Anspruch 1, dadurch gekennzeichnet , daß das nadelförmige Eisen(III)-oxidhydroxid $\alpha$-FeOOH ist.

3. Verfahren nach Anspruch 1, dadurch gekennzeichnet , daß das nadelförmige Eisen(III)-oxidhydroxid $\gamma$-FeOOH ist.

4. Verfahren nach einem der Ansprüche 1 bis 3, dadurch gekennzeichnet , daß das eingesetzte nadelförmige FeOOH eine spezifische Oberfläche von 15 bis 80 $m^2/g$ und ein Längen/Dicken-Verhältnis von 2 bis 30 aufweist.

5. Verfahren nach einem der Ansprüche 1 bis 3, dadurch gekennzeichnet , daß der ausgewaschene und getrocknete Feststoffanteil in zerkleinerter Form mit einer Teilchengröße von 0,1 bis 5 mm zur Temperung eingesetzt wird.

6. Verfahren nach einem der Ansprüche 1 bis 3, dadurch gekennzeichnet , daß der ausgewaschene und getrocknete Feststoffanteil in zerkleinerter Form mit einer Teilchengröße von 0,1 bis 1 mm zur Temperung eingesetzt wird.

7. Verwendung der nach einem der Ansprüche 1 bis 6 hergestellten hexagonalen Ferrite zur Herstellung von magnetischen Aufzeichnungsträgern.

8. Verwendung der nach einem der Ansprüche 1 bis 6 hergestellten hexagonalen Ferrite zur Herstellung von Plastoferriten.

**Claims**

1. A process for the preparation of a finely divided and acicular hexagonal ferrite of the formula $AMe_xFe_{12-x}O_{19}$, where x is ⩽ 4, A is barium or strontium and Me is indium or equimolar amounts of zinc or cobalt and titanium, wherein an aqueous dispersion of acicular iron (III) oxide hydroxide is reacted with an aqueous $ACl_2$ solution, an aqueous Me chloride solution and an aqueous sodium carbonate solution, the resulting mixture is heated, the solid part of the dispersion obtained is separated off from the aqueous phase, washed thoroughly, dried, comminuted, and the resulting powder is heated at from 800 to 1070° C.

2. A process as claimed in claim 1, wherein the acicular iron (III) oxide hydroxide is α-FeOOH.

3. A process as claimed in claim 1, wherein the acicular iron (III) oxide hydroxide is γ-FeOOH.

4. A process as claimed in any of claims 1 to 3, wherein the acicular FeOOH employed has a specific surface area of from 15 to 80 m²/g and a length/width ratio of from 2 to 30.

5. A process as claimed in any of claims 1 to 3, wherein the washed and dried solid constituent is employed in the heating step in a comminuted form having a particle size of from 0.1 to 5 mm.

6. A process as claimed in any of claims 1 to 3, wherein the washed and dried solid constituent is employed in the heating step in a comminuted form having a particle size of from 0.1 to 1 mm.

7. Use of a hexagonal ferrite prepared as claimed in any of claims 1 to 6 for the production of magnetic recording media.

8. Use of a hexagonal ferrite prepared as claimed in any of claims 1 to 6 for the production of plastoferrites.

**Revendications**

1. Procédé de préparation de ferrites hexagonaux en fines particules de forme aciculaire, de formule AMe$_x$Fe$_{12-x}$O$_{19}$ dans laquelle x est égal ou inférieur à 4, A représente le baryum et/ou le strontium et Me représente l'indium ou des quantités équimoléculaires de zinc ou de cobalt et de titane, caractérisé en ce que l'on fait réagir une dispersion aqueuse d'oxyde basique de fer-III de forme aciculaire avec une solution aqueuse d'ACl$_2$, une solution aqueuse de chlorure de Me et une solution aqueuse de carbonate de sodium, on chauffe le mélange obtenu, on sépare la matière solide de la dispersion ainsi obtenue d'avec la phase aqueuse, on la lave, on la sèche et on la broie et on chauffe la poudre obtenue à des températures de 800 à 1070 degrés C.

2. Procédé selon la revendication 1, caractérisé en ce que l'oxyde basique de fer-III aciculaire consiste en alpha-FeOOH.

3. Procédé selon la revendication 1, caractérisé en ce que l'oxyde basique de fer-III aciculaire consiste en gamma-FeOOH.

4. Procédé selon l'une des revendications 1 à 3, caractérisé en ce que le FeOOH aciculaire mis en oeuvre a une surface spécifique de 15 à 80 m²/g et un rapport longueur/épaisseur de 2 à 30.

5. Procédé selon l'une des revendications 1 à 3, caractérisé en ce que la fraction solide lavée et séchée est mise en oeuvre pour la cuisson a l'état broyé ou une dimension de particule de 0,1 à 5 mm.

6. Procédé selon l'une des revendications 1 à 3, caractérisé en ce que la fraction solide lavée et séchée est mise en oeuvre pour la cuisson à l'état broyé avec une dimension de particule de 0,1 à 1 mm.

7. Utilisation des ferrites hexagonaux préparés selon l'une des revendications 1 à 6 pour la fabrication de supports d'enregistrement magnétiques.

8. Utilisation des ferrites hexagonaux préparés selon l'une des revendications 1 à 6 pour la fabrication de plastoferrites.